# FASCICULE DE BREVET EUROPEEN

(11) **EP 1 803 996 B1**
(45) Date de publication et mention de la délivrance du brevet: **17.08.2016**
(21) Numéro de dépôt: 06291911.3
(22) Date de dépôt: 12.12.2006
(51) Int. Cl.: F22B 37/00

(54) **Dispositif et procédé d'intervention dans une boîte à eau d'un échangeur de chaleur**
Interventionsverfahren und Vorrichtung in einem Wasserkasten eines Wärmetauschers
Intervention method and device in a water-chamber of a heat exchanger

(30) Priorité: 29.12.2005 FR 0513471
(43) Date de publication de la demande: 04.07.2007
(73) Titulaire: AREVA NP, 92400 Courbevoie (FR)
(72) Inventeur: Gely, Marc, 71150 Fontaines (FR); Jambon, Philippe, 71710 Moncenis (FR); Parize, Christophe, 71640 Jambles (FR)
(74) Mandataire: Lavoix

(56) Documents cités:
- FR-A1- 2 211 721
- US-A- 4 216 893
- US-A- 4 329 769
- SCHUECKTANZ G: "OPTIMIZATION OF STEAM GENERATOR PERFORMANCE" KERNTECHNIK, CARL HANSER VERLAG. MUNCHEN, DE, vol. 51, no. 4, décembre 1987 (1987-12), pages 223-227, XP002042090 ISSN: 0932-3902

## Description

La présente invention concerne un dispositif et un procédé d'intervention dans une boîte à eau d'un échangeur de chaleur et, en particulier, d'un générateur de vapeur d'un réacteur nucléaire à eau sous pression.

Les réacteurs nucléaires à eau sous pression comportent un circuit primaire dans lequel circule l'eau de refroidissement sous pression du réacteur nucléaire, qui est généralement constitué de plusieurs boucles sur chacune desquelles est disposé un générateur de vapeur assurant, par échange de chaleur entre l'eau de refroidissement sous pression du réacteur nucléaire et l'eau d'alimentation, l'échauffement et la vaporisation de l'eau d'alimentation, de manière à produire de la vapeur qui est envoyée à une turbine de la centrale nucléaire. Les générateurs de vapeur des réacteurs nucléaires à eau sous pression comportent une enveloppe de forme générale cylindrique disposée avec son axe vertical dans laquelle est disposée un faisceau de tubes d'échange de chaleur et une boîte à eau de forme sensiblement hémisphérique constituant la partie inférieure du générateur de vapeur, en dessous de l'enveloppe renfermant le faisceau.

Une plaque tubulaire de forte épaisseur, disposée horizontalement et traversée par des trous de direction verticale, disposés suivant un réseau, assure la séparation entre la partie supérieure du générateur de vapeur et la boîte à eau. Les tubes du faisceau du générateur de vapeur sont engagés et fixés de manière étanche par leurs parties d'extrémités dans les trous de la plaque tubulaire. La boîte à eau est délimitée, d'une part, par la paroi hémisphérique constituant la partie inférieure de l'enveloppe du générateur de vapeur et, d'autre part, par la surface inférieure horizontale de la plaque tubulaire suivant laquelle débouchent les trous de passage et de fixation des tubes du faisceau.

Chacun des tubes du faisceau est cintré à sa partie supérieure et présente deux branches rectilignes dont les extrémités sont engagées dans les trous traversant la plaque tubulaire de part et d'autre d'une plaque de partition séparant la boîte à eau en deux compartiments reliés chacun, par une tubulure, à une conduite du circuit primaire, de manière que l'eau de refroidissement du réacteur pénètre dans la boîte à eau à l'intérieur de l'un des compartiments, pour être distribuée dans chacun des tubes du faisceau.

L'eau de refroidissement sous pression circulant à l'intérieur des tubes du faisceau est récupérée dans le second compartiment de la boîte à eau pour être reprise par une conduite du circuit primaire reliée au second compartiment de cette boîte à eau.

Afin de pouvoir accéder à la boîte à eau, l'enveloppe hémisphérique de cette boîte à eau est traversée par une ouverture de visite ou trou d'homme, dans chacune des deux parties de l'enveloppe hémisphérique délimitant un compartiment de la boîte à eau.

Pendant le fonctionnement du réacteur nucléaire, la plaque tubulaire, la plaque de partition ainsi que la paroi des tubes d'échange thermique du faisceau de générateur de vapeur, subissent des contraintes mécaniques et thermiques. Il en est de même des zones de soudage entre la plaque tubulaire et la plaque de partition.

Après un certain temps de fonctionnement, ces contraintes peuvent générer l'apparition de fissures ou d'amorces de fissures qui doivent être détectées de manière à éviter toute fuite d'eau de refroidissement sous pression dans le volume intérieur de l'enveloppe du générateur de vapeur dans lequel on introduit l'eau d'alimentation et de manière à ce qu'elles ne puissent pas porter atteinte à l'intégrité de l'enveloppe sous pression en cas de propagation des fissures.

Il est donc nécessaire d'effectuer périodiquement, par exemple lors des arrêts programmés de la centrale nucléaire pour le rechargement de la cuve du réacteur en assemblages de combustible, des contrôles des tubes des générateurs de vapeur ainsi que des zones de raccordement entre la plaque tubulaire et la plaque de partition.

Dans le cas où des fissures ou des amorces de fissures sont détectées, une intervention doit être réalisée pour éviter des risques de fuite ou une remise en cause de l'intégrité de l'enceinte sous pression lors de la remise en fonctionnement du générateur de vapeur.

Les contrôles et les interventions peuvent être effectués par des opérateurs travaillant à l'intérieur de la boîte à eau du générateur de vapeur.

Cette technique présente l'inconvénient de faire travailler les opérateurs dans une zone fortement radioactive contenant des dépôts de matériaux activés qui sont amenés dans la boîte à eau par l'eau de refroidissement du réacteur nucléaire circulant au contact des assemblages de combustible du coeur. De ce fait, les doses reçues par les opérateurs peuvent être importantes, même dans le cas d'opérations réalisées de manière très rapides avec une présence la plus réduite de chacun des opérateurs à l'intérieur de la boîte à eau du générateur de vapeur.

Il est donc nécessaire de faire intervenir un nombre important d'opérateurs de façon à limiter les doses qu'ils reçoivent.

Pour éviter les inconvénients liés à la nécessité de faire pénétrer des opérateurs dans la boîte à eau, il est connu d'utiliser des dispositifs commandés à distance depuis l'extérieur de la boîte à eau pour réaliser les opérations de contrôle ainsi que pour réaliser les différentes interventions par exemple pour éliminer les fissures ou les amorces de fissures ou pour toute autre intervention.

Ces dispositifs d'intervention à distance permettent de réduire le temps de présence d'opérateurs dans la boîte à eau du générateur de vapeur ou même de supprimer le besoin de faire intervenir des opérateurs dans la boîte à eau.

A cet effet, on connaît un bras robot de type anthropomorphe qui est introduit à l'intérieur de la boîte à eau par l'ouverture de visite et qui comporte une partie d'accrochage fixée sur la paroi de la boîte à eau au voisinage de cette ouverture.

On connaît également des dispositifs d'intervention dans une boîte à eau d'un générateur de vapeur qui comporte une platine d'accrochage du dispositif sous la surface inférieure de la plaque tubulaire et une tourelle montée rotative sur la platine d'accrochage autour d'un axe perpendiculaire à la platine, c'est à dire un axe vertical perpendiculaire à la plaque tubulaire pendant l'intervention.

Le dispositif comporte également un ou deux bras télescopiques solidaires en rotation de la tourelle de manière à pouvoir être déplacés en rotation autour de l'axe de la tourelle, pour balayer une ou deux zones annulaires.

Les dispositifs d'intervention utilisés jusqu'à présent sont, d'une manière générale, d'un encombrement assez important et extrêmement complexes quant à leur structure et nécessitent des opérations longues et difficiles en particulier pour leur introduction et leur mise en place dans la boîte à eau du générateur de vapeur.

De plus, ces dispositifs sont généralement prévus pour des opérations spécifiques et ne sont pas destinés à supporter des efforts importants, notamment au cours d'opérations d'usinage.

Par ailleurs, la mise en place du dispositif à l'intérieur de la boîte à eau, dans une phase initiale de l'intervention, est une opération complexe qui peut nécessiter la présence d'au moins un opérateur à l'intérieur de la boîte à eau.

On connaît dans le document US-A-4 329 769 un dispositif d'intervention dans une boîte à eau d'un échangeur de chaleur comprenant au moins un rail muni d'organes de fixation sur la paroi hémisphérique de la boîte à eau et une tourelle déplaçable sur les rails suivant une configuration en XY, et portant des outils d'intervention dans les trous verticaux de la plaque tubulaire.

On connaît également dans le document US-A-4 216 893 un dispositif d'intervention dans une boîte à eau d'un échangeur de chaleur comprenant une colonne verticale fixée entre la plaque tubulaire et le fond de la paroi hémisphérique. Sur cette colonne est montée pivotante une flèche qui porte des outils d'intervention dans les trous de la plaque tubulaire.

L'invention a donc pour but de proposer un dispositif et un procédé d'intervention dans une boîte à eau d'un échangeur de chaleur, qui évitent les inconvénients précédemment mentionnés.

L'invention a donc pour objet un dispositif d'intervention dans une boîte à eau d'un échangeur de chaleur comportant une paroi de forme sensiblement hémisphérique comprenant au moins une ouverture de visite et délimitée, à sa partie supérieure, par une plaque tubulaire traversée par une pluralité de trous verticaux, caractérisé en ce qu'il comprend :
- au moins un rail muni d'organes de fixation sur la face inférieure de la plaque tubulaire et supportant au moins un chariot déplaçable le long dudit rail et équipé d'un moyen de levage pendulaire, et
- un bras robotisé comportant une embase de fixation munie, d'une part, d'organes d'accrochage sur la face inférieure de la plaque tubulaire, de part et d'autre dudit rail, et, d'autre part, d'un moyen d'entraînement coopérant avec le moyen de levage pour accoster l'embase de fixation contre la plaque tubulaire.

Selon d'autres caractéristiques de l'invention :
- ledit au moins rail comporte au moins un second rail placé dans le prolongement du premier rail et un second chariot déplaçable le long dudit rail et le dispositif comprend un porte-outils comportant une embase de fixation munie, d'une part, d'organes d'accrochage sur la face inférieure de la plaque tubulaire, de part et d'autre dudit rail et, d'autre part, d'un moyen d'entraînement avec le moyen de levage pour accoster l'embase de fixation contre la plaque tubulaire,
- lesdits organes de fixation dudit au moins rail sont formés par au moins deux pinces de bridage destinées à être introduites chacune dans un trou vertical de la plaque tubulaire,
- le dispositif comprend une rampe d'introduction du bras robotisé comportant des éléments de fixation à la périphérie externe de l'ouverture de visite et un plateau de support du bras robotisé dont l'embase de fixation est placée en regard de l'ouverture de visite et déplaçable sur ladite rampe,
- l'embase de fixation du bras robotisé et du porte-outils est formée par une plaque d'appui de forme générale parallélépipédique comportant un logement central du moyen d'entraînement et, sur deux côtés opposés, un évidement de positionnement du rail,
- la plaque d'appui comporte, dans au moins un évidement d'un de ses côtés, deux colonnes d'indexage destinées à être introduites chacune dans un trou vertical de la plaque tubulaire,
- les organes d'accrochage de la plaque d'appui de chaque embase comportent au moins deux pinces de bridage hydrauliques destinées à être introduites chacune dans un trou vertical de la plaque tubulaire,
- les organes d'accrochage de la plaque d'appui de chaque embase comportent quatre pinces de bridage hydrauliques destinées à être introduites chacune dans un trou vertical de la plaque tubulaire, chacune desdites pinces étant placée à un coin de la plaque d'appui,
- le moyen de levage pendulaire est formé par une chaîne ou un câble,
- le moyen d'entraînement est formé par une roue entraînée en rotation par un motoréducteur et est muni d'organes de prise avec le moyen de levage, et
- la roue est une roue dentée.

L'invention a également pour objet un procédé d'intervention dans une boîte à eau d'un échangeur de chaleur comportant une paroi de forme sensiblement hémisphérique comprenant au moins une ouverture de visite et délimitée à sa partie supérieure par une plaque tubulaire traversée par une pluralités de trous verticaux, caractérisé en ce que :
- on introduit dans la boîte à eau par l'ouverture de visite au moins un rail supportant au moins un chariot déplaçable le long dudit rail et équipé d'un moyen de levage pendulaire,
- on fixe ledit rail sur la face inférieure de la plaque tubulaire,
- on place, à l'extérieur de la boîte à eau, un bras robotisé comportant une embase de fixation munie, d'une part, d'organes d'accrochage sur la face inférieure de la plaque tubulaire de part et d'autre dudit rail et, d'autre part, d'un moyen d'entraînement coopérant avec le moyen de levage,
- on dispose l'embase de fixation du bras robotisé en regard de l'ouverture de visite,
- on hisse le bras robotisé à l'intérieur de la boîte à eau par l'intermédiaire du moyen de levage coopérant avec le moyen d'entraînement,
- on fixe à un emplacement déterminé l'embase de fixation du bras robotisé sur la face inférieure de la plaque tubulaire par les organes d'accrochage dans les trous verticaux, et
- on commande à distance depuis l'extérieur de la boîte à eau le bras robotisé pour effectuer des opérations à l'intérieur de cette boîte à eau.

Selon d'autres caractéristiques de l'invention :
- on déplace, d'une part, sous l'action du moyen d'entraînement coopérant avec le moyen de levage et, d'autre part, au moyen du chariot, le bras robotisé jusqu'à un nouvel emplacement prédéterminé pour effectuer une nouvelle série d'opérations à l'intérieur de la boîte à eau,
- après avoir fixé l'embase de fixation du bras robotisé sur la face inférieure de la plaque tubulaire :
- on dispose en regard de l'ouverture de visite, une embase de fixation d'un porte-outils munie d'organes d'accrochage sur la face inférieure de la plaque tubulaire de part et d'autre dudit rail et d'un moyen d'entraînement coopérant avec le moyen de levage,
- on hisse le porte-outils à l'intérieur de la boîte à eau par l'intermédiaire du moyen de levage coopérant avec le moyen d'entraînement,
- on fixe à un emplacement déterminé l'embase de fixation du porte-outils sur la face inférieure de la plaque tubulaire par les organes d'accrochage dans les trous verticaux, et
- on commande à distance depuis l'extérieur de la boîte à eau, le bras robotisé pour effectuer, d'une part, différentes opérations à l'intérieur de cette boîte à eau et, d'autre part, des changements d'outils nécessaires à la réalisation de l'intervention, en faisant coopérer l'extrémité du bras robotisé avec les outils en attente sur le porte-outils.

L'invention sera mieux comprise à la lecture de la description qui va suivre, donnée à titre d'exemple et faite en se référant aux dessins annexés, sur lesquels :
- la Fig. 1 est une vue schématique en perspective partiellement arrachée de la partie inférieure d'un générateur de vapeur comportant une boîte à eau dans laquelle une intervention est réalisée au moyen d'un dispositif conforme à l'invention,
- la Fig. 2 est une vue schématique en perspective d'une rampe d'introduction d'un bras robotisé du dispositif d'intervention,
- la Fig. 3 est une vue schématique en perspective d'un rail et d'un chariot de support et de déplacement du bras robotisé,
- la Fig. 4 est une vue schématique en coupe transversale du rail et du chariot de la Fig. 3,
- la Fig. 5 est une vue schématique en perspective d'une embase de fixation du bras robotisé sur la plaque tubulaire,
- la Fig. 6 est une vue schématique en perspective d'un exemple d'un porte-outils pour le bras robotisé, et

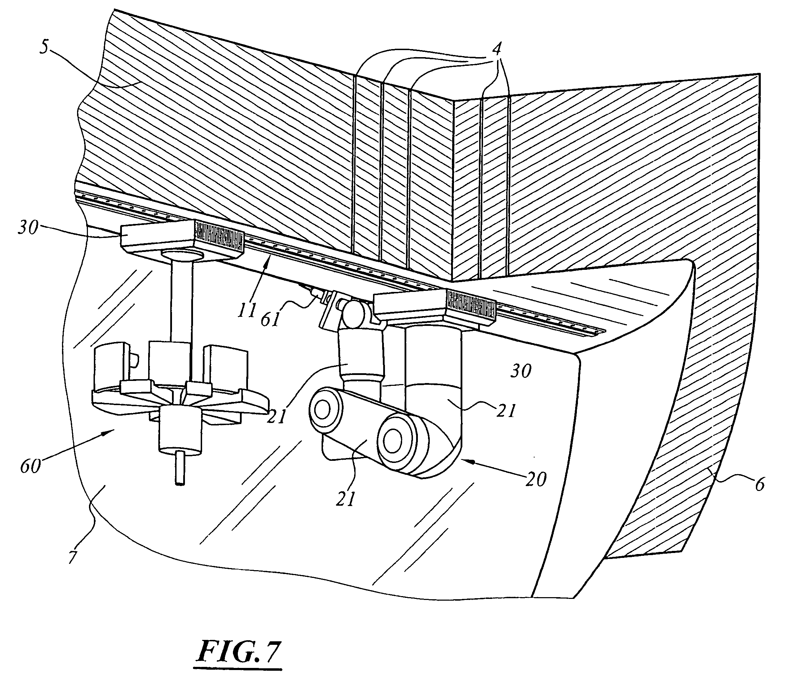

- la Fig. 7 est une vue schématique en perspective et partielle de la boîte à eau du générateur de vapeur équipée du dispositif d'intervention, conforme à l'invention.

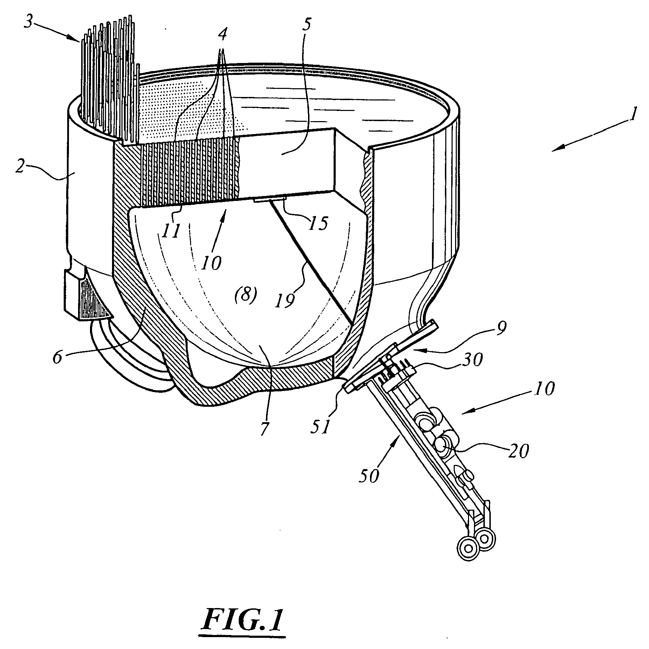

Sur la Fig. 1, on a représenté la partie inférieure d'un échangeur de chaleur, comme par exemple d'un générateur de vapeur d'une centrale nucléaire, désigné d'une manière générale par la référence 1. Ce générateur de vapeur 1 comporte une enveloppe externe 2 de forme générale cylindrique dans laquelle est disposée un faisceau d'échange thermique constitué par un ensemble de tubes 3.

Chacun des tubes 3 du faisceau d'échange du générateur de vapeur présente, de manière classique, une forme en U et comporte une partie supérieure cintrée et deux branches rectilignes dont les extrémités inférieures sont engagées et fixées dans des trous verticaux 4 d'une plaque tubulaire 5 séparant la partie supérieure du générateur de vapeur 1 renfermant le faisceau de tubes 3, d'une partie inférieure délimitée par une paroi sensiblement hémisphérique 6 constituant la boîte à eau 7 du générateur de vapeur 1.

Cette boîte à eau 7 est délimitée, à sa partie supérieure, par la surface inférieure de la plaque tubulaire 5.

La boîte à eau 7 est séparée en deux compartiments par une cloison 8 verticale disposée dans un plan diamétral de la plaque tubulaire 5 constituant un plan de symétrie, de part et d'autre duquel sont fixées les extrémités des branches rectilignes de chacun des tubes 3 du faisceau du générateur de vapeur 1.

La cloison 8 sépare la boîte à eau 7 en un premier et en un second compartiments qui sont reliés respectivement à une conduite d'entrée et à une conduite de départ d'eau de refroidissement, non représentées, du réacteur nucléaire à eau sous pression qui circule à l'intérieur des tubes 3 entre le compartiment d'entrée et le compartiment de sortie séparés par la cloison 8. Cette cloison 8 constitue une plaque de partition qui est fixée à la surface inférieure de la plaque tubulaire 5 par des cordons de soudure continus s'étendant sur toute la longueur du contact entre la plaque tubulaire 5 et la cloison 8.

Le plan de coupe de la Fig. 1 est un plan parallèle à la cloison 8 de sorte qu'un seul des deux compartiments de la boîte à eau est visible sur la Fig. 1.

La paroi 6 de la boîte à eau 7 est traversée par une ouverture de visite 9 ou trou d'homme permettant d'accéder à l'intérieur du compartiment de cette boîte à eau 7, par exemple pour effectuer des opérations de contrôle, de réparation, de maintenance ou d'usinage.

En effet, l'ouverture de visite 9 (Fig. 1) peut être utilisée en particulier pour introduire dans la boîte à eau 7 du générateur de vapeur, un dispositif d'intervention désigné par la référence générale 10, conforme à l'invention, qui peut être utilisé pour effectuer toutes opérations, comme par exemple de contrôle, de réparation, d'usinage ou de maintenance.

Le dispositif d'intervention 10 se compose de plusieurs éléments indépendants permettant l'introduction d'organes d'intervention à l'intérieur de la boîte à eau 7, ainsi que le déplacement de ces organes d'intervention à l'intérieur de ladite boîte à eau 7.

Ainsi que représenté sur les Figs. 1 à 3, le dispositif d'intervention comprend au moins un rail 11 muni d'organes de fixation 18 au-dessous de la plaque tubulaire 5.

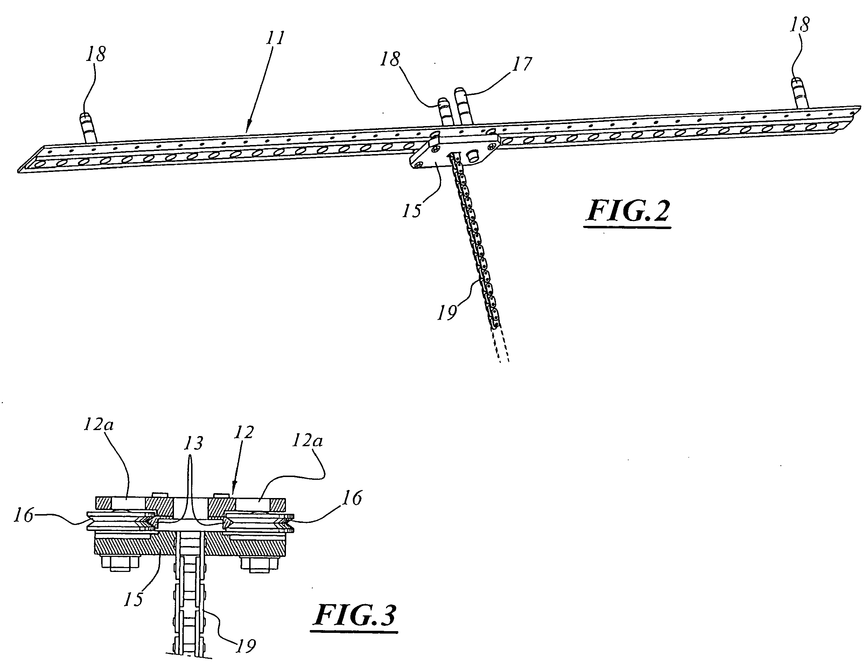

Comme montré aux Figs. 2 et 3, le rail 11 est formé d'une semelle 12 destinée à être appliquée sur la face inférieure de la plaque tubulaire 5 et d'un chemin de roulement 13 supporté par la semelle 12 et sur lequel se déplace au moins un chariot 15. Le chemin de roulement 13 s'étend sur toute la longueur de la semelle 12 du rail 11 et possède, sur chacun de ses bords longitudinaux, un profil en forme de V destiné à coopérer avec des galets de roulement 16 portés par le chariot 15 et de forme complémentaire aux bords longitudinaux du chemin de roulement 13.

Dans l'exemple de réalisation représenté sur les Figs. 2 et 3, les galets 16 ont chacun la forme d'un diabolo.

De préférence, le rail 11 est formé de deux portions de rail de façon à faciliter leur introduction dans la boîte à eau 7 par l'intermédiaire de l'ouverture de visite 9 et chaque rail 11 comporte des organes de fixation au-dessous de la plaque tubulaire 5.

Ces organes de fixation comprennent, de préférence, une pince de bridage 17 temporaire et trois pinces de bridage 18 réparties sur toute la longueur de la semelle 12 du rail 11, ainsi que montré à la Fig. 2. La pince de bridage 17 temporaire permet également de verrouiller le chariot 15 sur le rail 11 et cette pince de bridage 17 temporaire ainsi que les pinces de bridage 18 sont de type classique et comprennent chacune des douilles expansibles radialement et présentant chacune un diamètre externe nominal très légèrement inférieur au diamètre interne des trous verticaux 4. L'expansion des douilles des pinces 17 est de préférence commandée manuellement et celle des pinces 18 est manoeuvrable depuis l'extérieur de la boîte à eau 7 par un organe d'entraînement de type approprié et connu.

La pince de bridage 17 temporaire permet de maintenir le rail 11 sur la face inférieure de la plaque tubulaire 5 pendant l'accrochage du rail 11 au moyen des pinces de bridage 18.

Le rail 11 peut comporter plusieurs chariots 15 pour le support et le déplacement de deux éléments différents, comme on le verra ultérieurement.

Ainsi que montré à la Fig. 2, le ou les chariots 15 sont équipés d'un moyen de levage 19 pendulaire formé par une chaîne ou un câble ou par tout autre organe approprié de type connu.

Le dispositif d'intervention comprend également un bras robotisé désigné dans son ensemble par la référence générale 20. Ce bras robotisé 20 de type industriel comporte plusieurs éléments de bras 21 articulés entre eux pour permettre à l'extrémité libre 22 de pouvoir évoluer dans l'espace sur 360°. L'extrémité libre 22 du bras robotisé 20 est pourvue de moyens de fixation d'outils d'intervention dans la boîte à eau 7 ou d'organes de visualisation ou de contrôle appropriés à l'intervention à effectuer.

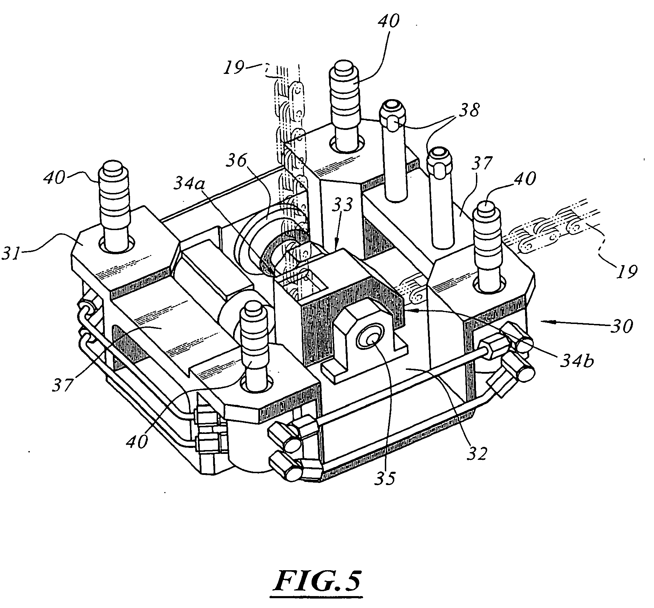

Le bras robotisé 20 comporte une embase 30 de fixation au-dessous de la plaque tubulaire 5 et, ainsi que montré à la Fig. 5, cette embase de fixation 30 est formée par une plaque d'appui 31 de forme générale parallélépipédique. La plaque d'appui 31 de l'embase de fixation 30 au-dessous de la plaque tubulaire 5 comporte un logement central 32 dans lequel est placé un moyen d'entraînement 33 coopérant avec le moyen de levage 19 de façon à accoster l'embase 30 contre ladite plaque tubulaire. Le moyen d'entraînement 33 est formé par une roue, non représentée, disposée dans un coffre 34 et cette roue est portée par un axe 35 entraîné en rotation par un moto-réducteur 36 protégé par un limiteur de couple non représenté. Cette roue est équipée d'organes de prise avec le moyen de levage 19 et dans le cas où ce moyen de levage 19 est formé par une chaîne, la roue est une roue dentée. A cet effet, le coffre 34 comporte une ouverture 34a d'entrée de la chaîne 19 et une ouverture 34b de sortie de cette chaîne 19.

Par ailleurs, la plaque d'appui 31 comporte sur deux de ses côtés opposés, un évidement 37 de positionnement du rail 11. Au moins un des évidements 37 est équipé de deux colonnes d'indexage 38. Ces colonnes d'indexage 38 sont de type connu et comportent chacune un ressort, non représenté, leur permettant de venir, de part et d'autre du chemin de roulement 13, en appui sur la face inférieure de la semelle 12 qui dispose de trous 12a en correspondance avec des trous 4 prédéterminés de la plaque tubulaire 5. La plaque d'appui 31 comporte également au moins deux pinces de bridage 40 hydrauliques, de type connu, destinées chacune à pénétrer dans un trou vertical 4 de la plaque tubulaire 5 de préférence et ainsi que montré à la Fig. 5, la plaque d'appui 31 est pourvue de quatre pinces de bridage 40 hydrauliques disposées chacune à un coin de cette plaque d'appui 31. Ces pinces de bridage 40 sont de type connu et comportent chacune une douille expansive radialement de façon à se fixer chacune à l'intérieur d'un trou vertical 4 pour maintenir l'embase 30 et le bras robotisé au-dessous de la plaque tubulaire 5 à l'intérieur de la boîte à eau 7.

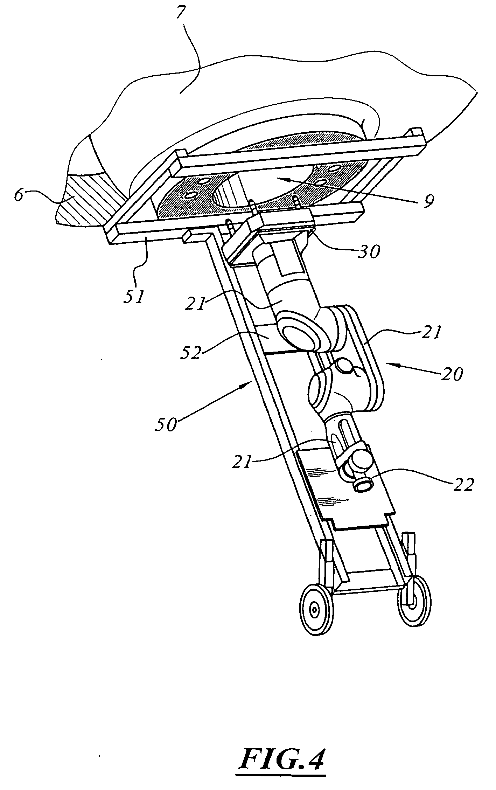

Afin de faciliter l'introduction du bras robotisé 20 à l'intérieur de la boîte à eau 7, le dispositif comporte une rampe 50 (Figs. 1 et 4) de support et d'introduction de ce bras robotisé 20. Cette rampe 50 est mobile et est pourvue d'éléments de fixation 51 à la périphérie externe de l'ouverture de visite 9 et comporte un plateau 52 de support du bras robotisé 20 dont son embase 30 est placée en regard de l'ouverture de visite 9. Ce chariot 52 est déplaçable sur la rampe 50.

Le dispositif comporte aussi au moins un second chariot 15 déplaçable sur le rail 11 et identique au premier chariot 15.

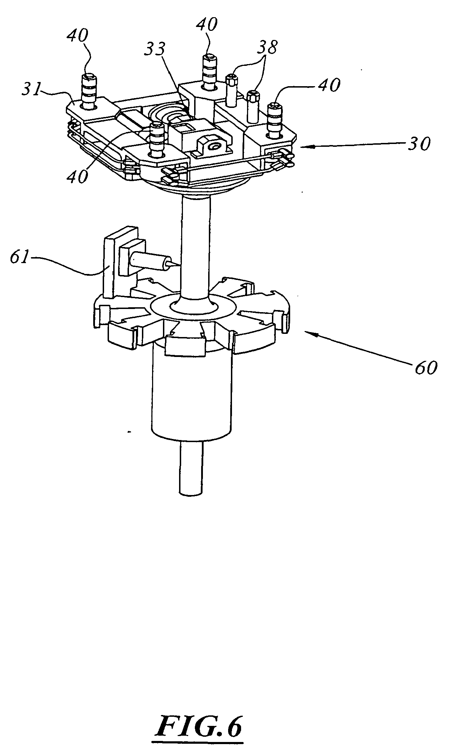

Comme montré à la Fig. 6, le dispositif comporte également un porte-outils 60 comprenant une embase de fixation 30 identique à l'embase de fixation 30 du bras robotisé 20. Cette embase de fixation est munie de deux colonnes d'indexage 38, d'organes d'accrochage 40 au-dessous de la plaque tubulaire 5 de part et d'autre du rail 11 et d'un moyen 33 d'entraînement avec le moyen de levage 19 pour accoster l'embase de fixation 30 du porte-outils 60 contre la plaque tubulaire 5. De manière classique, le porte-outils 60 comporte des alvéoles destinées à recevoir chacune un outil 61 adapté au travail à effectuer par le bras robotisé. Cet outil peut être, par exemple, un organe de contrôle ou un organe de visualisation ou un organe d'usinage d'une pièce à l'intérieur de la boîte à eau 7.

Le dispositif d'intervention 10 est placé à l'intérieur de la boîte à eau 7 de la façon suivante.

Tout d'abord un opérateur situé dans cette boîte à eau 7 réceptionne à travers l'orifice de visite 9, le premier rail 11 sur lequel est verrouillé un chariot 15 grâce à la pince temporaire 17. L'opérateur maintient ce rail 11 sur la face inférieure de la plaque tubulaire 5 à l'aide de cette pince 17, le temps de visser à un couple déterminé dans les trous 4 verticaux les pinces de bridage 18 à chaque extrémité du rail 11. L'opérateur retire alors la pince temporaire 17 libérant le chariot 15, et verrouille la pince de bridage 18 située sensiblement au centre du rail 11. Ensuite, il effectue la même opération avec le second rail 11 de façon à ce que les rails 11 forment un chemin de roulement continu. Les rails 11 comportent donc deux chariots 15 à partir de chacun desquels pend à l'intérieur de la boîte à eau 7, une chaîne 19.

Ensuite, l'opérateur, placé à l'extérieur de la boîte à eau, bride la rampe 50 sur le bord externe de l'ouverture de visite 9 par les éléments de fixation 51. Ainsi que montré à la Fig. 4, le chariot 52 de la rampe 50 supporte le bras robotisé 20, l'embase de fixation 30 de ce bras robotisé étant placée en regard de l'ouverture de visite 9.

L'opérateur introduit l'extrémité libre d'une chaîne 19 dans l'ouverture 34a du moyen d'entraînement 33 porté par l'embase 30 du bras robotisé 20 et engrène cette chaîne 19 avec la roue dentée de ce moyen d'entraînement 33. L'extrémité de la chaîne ressort par l'ouverture de sortie 34b. La roue dentée du moyen d'entraînement 33 est entraînée par le motoréducteur 36.

Le chariot 52 se déplace sur la rampe 50 grâce à un treuil, non représenté, afin d'introduire le bras robotisé 20 jusqu'à sa première articulation à l'intérieur de la boîte à eau 7. Le bras robotisé 20 est alors replié pour faciliter son introduction dans la boîte à eau 7. Le chariot 15 pouvant se déplacer librement en translation sur le chemin de roulement 13 du rail 11, ce chariot 15 vient au droit de l'axe du bras robotisé et, une fois à l'intérieur de ladite boîte à eau 7, le bras robotisé 20 est replié pour éviter qu'il vienne buter sur les parois de la boîte à eau 7 et pour qu'il soit en position de recherche du point d'équilibre afin d'avoir la face supérieure de l'embase de fixation 30 parallèle à la plaque tubulaire 5.

Le bras robotisé 20 est ensuite soulevé par l'intermédiaire de la chaîne 19 et de la roue dentée du moyen d'entraînement 33 jusqu'à ce que les deux colonnes d'indexage 38 à ressort viennent en appui sur la face inférieure de la semelle 12 de part et d'autre du chemin de roulement 13 de façon à réaliser un positionnement latéral. Le bras robotisé 20 est déplacé sur le rail 11 par un opérateur depuis l'extérieur de la boîte à eau 7 au moyen d'une perche pour que les colonnes d'indexage 38 viennent se placer dans des trous 12a de la semelle 12. Le bras robotisé est hissé toujours par l'intermédiaire de la chaîne 19 et de la roue dentée du moyen d'entraînement 33 afin que les appuis de la plaque 31 de l'embase de fixation 30 soient au contact de la face inférieure de la plaque tubulaire 5. Les pinces de bridage 40 viennent se positionner chacune dans un trou vertical 4 de cette plaque tubulaire 5 ainsi que les colonnes d'indexage 38. Le plaquage correct de l'embase de fixation 30 est contrôlé par deux capteurs de déplacement, non représentés. Dès que cette embase de fixation 30 est plaquée contre la face inférieure de la plaque tubulaire 5, le bras robotisé 20 est verrouillé sur ladite plaque tubulaire 5 au moyen des pinces de bridage 40 hydrauliques.

Ainsi, le bras robotisé 20 est fixé à un emplacement prédéterminé au-dessous de la plaque tubulaire 5.

L'opérateur effectue les mêmes opérations pour fixer également au-dessous de la plaque tubulaire 5, le porte-outils 60 au moyen de son embase de fixation 30.

L'opérateur commande à distance depuis l'extérieur de la boîte à eau 7 le bras robotisé 20 pour qu'il effectue à partir des outils 61 portés par le porte-outils 60 les différentes opérations, comme par exemple des opérations de contrôle, de visualisation ou encore des opérations d'usinage.

Une fois que le bras robotisé 20 a effectué ces opérations dans une zone déterminée de la boîte à eau 7, le bras robotisé 20 peut être déconnecté de la plaque tubulaire 5 et descendu par l'intermédiaire de la chaîne 19 coopérant avec la roue dentée du moyen d'entraînement 33 et déplacé au moyen du chariot 15 jusqu'à un nouvel emplacement prédéterminé pour effectuer une nouvelle série d'opérations à l'intérieur de la boîte à eau 7.

Ces interventions peuvent être effectuées sans nécessiter la présence, à un moment quelconque d'opérateurs à l'intérieur de la boîte à eau du générateur de vapeur.

En effet, l'introduction, la mise en place et la fixation du bras robotisé et du porte-outils à l'intérieur de la boîte à eau peuvent être réalisées entièrement depuis l'extérieur de cette boîte à eau.

## Revendications

1. Dispositif d'intervention dans une boîte à eau (7) d'un échangeur de chaleur (1) comportant une paroi (6) de forme sensiblement hémisphérique comprenant au moins une ouverture de visite (9) et délimitée à sa partie supérieure par une plaque tubulaire (5) traversée par une pluralité de trous verticaux (4), **caractérisé en ce qu'**il comprend :
- au moins un rail (11) muni d'organes de fixation (18) sur la face inférieure de la plaque tubulaire (5) et supportant au moins un chariot (15) déplaçable le long dudit rail (11) et équipé d'un moyen de levage (19) pendulaire, et
- un bras robotisé (20) comportant une embase de fixation (30) munie, d'une part, d'organes d'accrochage (40) sur la face inférieure de la plaque tubulaire (5) de part et d'autre dudit rail (11) et, d'autre part, d'un moyen d'entraînement (33) coopérant avec le moyen (19) de levage pour accoster l'embase de fixation (30) contre la plaque tubulaire (5).

2. Dispositif selon la revendication 1, **caractérisé en ce que** ledit au moins rail (11) comporte au moins un second rail placé dans le prolongement du premier rail et un second chariot (15) déplaçable le long du rail (11) et **en ce que** le dispositif comprend un porte-outils (60) comportant une embase de fixation (30) munie, d'une part, d'organes d'accrochage (40) sur la face inférieure de la plaque tubulaire (5), de part et d'autre dudit rail (11), et d'autre part, d'un moyen d'entraînement (33) avec le moyen de levage (19) pour accoster l'embase de fixation (30) contre la plaque tubulaire (5).

3. Dispositif selon la revendication 1 ou 2, **caractérisé en ce que** lesdits organes de fixation dudit au moins rail (11) sont formés par au moins deux pinces de bridage (18) destinées à être introduites chacune dans un trou vertical (4) de la plaque tubulaire (5).

4. Dispositif selon l'une quelconque des revendications 1 à 3, **caractérisé en ce qu'**il comprend une rampe mobile (50) d'introduction du bras robotisé (20) comportant des éléments de fixation (51) à la périphérie externe de l'ouverture de visite (9) et un plateau (52) de support du bras robotisé (20) dont l'embase de fixation (30) est placée en regard de l'ouverture de visite (9) et déplaçable sur ladite rampe (50).

5. Dispositif selon l'une quelconque des revendications 1 à 4, **caractérisé en ce que** l'embase de fixation (30) du bras robotisé (20) et du porte-outils (60) est formée par une plaque d'appui (31) de forme générale parallélépipédique comportant un logement central (32) du moyen d'entraînement (33) et, sur deux côtés opposés, un évidement (37) de positionnement du rail (11).

6. Dispositif selon la revendication 5, **caractérisé en ce que** la plaque d'appui (31) comporte dans au moins un évidement (37) d'un de ses côtés deux colonnes d'indexage (38) destinées a être introduites chacune dans un trou de la semelle 12 en correspondance avec un trou vertical (4) de la plaque tubulaire (5).

7. Dispositif selon l'une quelconque des revendications 1 à 6, **caractérisé en ce que** les organes d'accrochage de la plaque d'appui (31) comportent au moins deux pinces de bridage (40) hydrauliques, destinées a être introduites chacune dans un trou vertical (4) de la plaque tubulaire (5).

8. Dispositif selon l'une quelconque des revendications 1 à 6, **caractérisé en ce que** les organes d'accrochage de la plaque d'appui (31) comportent quatre pinces de bridage (40) hydrauliques, destinées a être introduites chacune dans un trou vertical (4) de la plaque tubulaire (5), chacune desdites pinces (40) étant placées à un coin de la plaque d'appui (31).

9. Dispositif selon l'une quelconque des revendications 1 à 8, **caractérisé en ce que** le moyen (19) de levage pendulaire est formé par une chaîne ou un câble.

10. Dispositif selon l'une quelconque des revendications 1 à 9, **caractérisé en ce que** le moyen (33) d'entraînement est formé par une roue entraînée en rotation par un moto-réducteur (36) et munie d'organes de prise avec le moyen (19) de levage.

11. Dispositif selon la revendication 10, **caractérisé en ce que** la roue est une roue dentée.

12. Procédé d'intervention dans une boîte à eau (7) d'un échangeur de chaleur (1) comportant une paroi (6) de forme sensiblement hémisphérique comprenant au moins une ouverture de visite (9) et délimitée à sa partie supérieure par une plaque tubulaire (5) traversée par une pluralité de trous verticaux (4), **caractérisé en ce que** :
- on introduit dans la boîte à eau (7) par l'ouverture de visite (9) au moins un rail (11) supportant au moins un chariot (15) déplaçable le long dudit rail (11) et équipé d'un moyen de levage (19) pendulaire,
- on fixe ledit rail (11) sur la face inférieure de la plaque tubulaire (5),
- on place, à l'extérieur de la boîte à eau (7), un bras robotisé (20) comportant une embase de fixation (30) munie, d'une part, d'organes d'accrochage (40) sur la face inférieure de la plaque tubulaire (5) et de part et d'autre dudit rail (11) et, d'autre part, d'un moyen (33) d'entraînement coopérant avec le moyen (19) de levage,
- on dispose l'embase de fixation (30) du bras robotisé (20) en regard de l'ouverture de visite (9),
- on hisse le bras robotisé à l'intérieur de la boîte à eau (7) par l'intermédiaire du moyen de levage (19) coopérant avec le moyen (33) d'entraînement,
- on fixe à un emplacement déterminé l'embase de fixation (30) du bras robotisé (20) sur la face inférieure de la plaque tubulaire (5) par les organes d'accrochage (40) dans les trous verticaux (4), et
- on commande à distance depuis l'extérieur de la boîte à eau (7) le bras robotisé (20) pour effectuer les différentes opérations à l'intérieur de cette boîte à eau (7).

13. Procédé selon la revendication (12), **caractérisé en ce que** l'on déplace, d'une part, sous l'action du moyen (33) d'entraînement coopérant avec le moyen (19) de levage et, d'autre part, au moyen du chariot (15), le bras robotisé (20) jusqu'à un nouvel emplacement prédéterminé pour effectuer une nouvelle série d'opérations à l'intérieur de la boîte à eau (7).

14. Procédé selon la revendication 12 ou 13, **caractérisé en ce que**, après avoir fixé l'embase de fixation (30) du bras robotisé (20), sur la face inférieure de la plaque tubulaire (5) :
- on dispose en regard de l'ouverture de visite (9) une embase de fixation (30) d'un porte-outils (60) munie d'organes d'accrochage (40) sur la face inférieure de la plaque tubulaire (5) de part et d'autre dudit rail (11) et d'un moyen (33) d'entraînement coopérant avec le moyen (19) de levage,
- on hisse le porte-outils (60) à l'intérieur de la boîte à eau (7) par l'intermédiaire du moyen (19) de levage coopérant avec le moyen (33) d'entraînement,
- on fixe à un emplacement déterminé l'embase de fixation (30) du porte-outils (60) sur la face inférieure de la plaque tubulaire (5) par les organes d'accrochage (40) dans les trous verticaux (4), et
- on commande à distance depuis l'extérieur de la boîte à eau (7) le bras robotisé (20) pour effectuer d'une part, différentes opérations à l'intérieur de cette boîte à eau et, d'autre part, des changements d'outils nécessaires à la réalisation de l'intervention, en faisant coopérer l'extrémité du bras robotisé (20) avec les outils en attente sur le porte-outil (60).

## Patentansprüche

1. Vorrichtung für einen Einsatz in einem Wasserkasten (7) eines Wärmetauschers (1), der eine Wand (6) mit einer im Wesentlichen hemisphärischen Form aufweist, die mindestens eine Inspektionsöffnung (9) aufweist und an ihrem oberen Abschnitt durch eine rohrförmige Platte (5) begrenzt ist, die von einer Mehrzahl von vertikalen Löchern (4) durchquert wird, **dadurch gekennzeichnet, dass** sie aufweist:
- mindestens eine Schiene (11), die an der unteren Seite der rohrförmigen Platte (5) mit Befestigungsmitteln (18) versehen ist und mindestens einen Schlitten (15) abstützt, der entlang der Schiene (11) bewegbar ist und mit einem pendelartigen Hebemittel (19) ausgestattet ist, und
- einen Roboterarm (20), der einen Befestigungssockel (30) aufweist, der einerseits an der unteren Seite der rohrförmigen Platte (5) auf beiden Seiten der Schiene (11) mit Kupplungsmitteln (40) und andererseits mit einem Antriebsmittel (33) ausgestattet ist, das mit dem Hebemittel (19) zusammenwirkt, um den Befestigungssockel (30) an die rohrförmige Platte (5) anzulegen.

2. Vorrichtung gemäß Anspruch 1, **dadurch gekennzeichnet, dass** die mindestens eine Schiene (11) mindestens eine in der Verlängerung der ersten Schiene platzierte zweite Schiene und einen entlang der Schiene (11) bewegbaren zweiten Schlitten (15) aufweist, und dass die Vorrichtung eine Werkzeughalterung (60) aufweist, die einen Befestigungssockel (30) aufweist, der einerseits auf der unteren Seite der rohrförmigen Platte (5) auf beiden Seiten der Schiene (11) mit Kupplungsmitteln (40) und andererseits mit einem Antriebsmittel (33) mit dem Hebemittel (19) ausgestattet ist, um den Befestigungssockel (30) an die rohrförmige Platte (5) anzulegen.

3. Vorrichtung gemäß Anspruch 1 oder 2, **dadurch gekennzeichnet, dass** die Befestigungsmittel der mindestens einen Schiene (11) durch mindestens zwei Einspannklemmen (18) ausgebildet sind, die vorgesehen sind, um jeweils in ein vertikales Loch (4) der rohrförmigen Platte (5) eingeführt zu werden.

4. Vorrichtung gemäß irgendeinem der Ansprüche 1 bis 3,
**dadurch gekennzeichnet, dass** sie eine mobile Rampe (50) zum Einführen des Roboterarms (20) aufweist, die am Außenumfang der Inspektionsöffnung (9) Befestigungselemente (51) und eine Platte (52) zum Abstützen des Roboterarms (20) aufweist, dessen Befestigungssockel (30) gegenüber der Inspektionsöffnung (9) platziert ist und auf der Rampe (50) bewegbar ist.

5. Vorrichtung gemäß irgendeinem der Ansprüche 1 bis 4,
**dadurch gekennzeichnet, dass** der Befestigungssockel (30) des Roboterarms (20) und der Werkzeughalterung (60) durch eine im Wesentlichen Parallelepiped-förmige Stützplatte (31) ausgebildet ist, die eine zentrale Aufnahme (32) des Antriebsmittels (33) und, auf zwei einander entgegengesetzten Seiten, eine Aussparung (37) zum Positionieren der Schiene (11) aufweist.

6. Vorrichtung gemäß Anspruch 5, **dadurch gekennzeichnet, dass** die Stützplatte (31) in mindestens einer Aussparung (37) auf einer ihrer Seiten zwei Indexierungspfeiler (38) aufweist, die vorgesehen sind, um jeweils in ein mit einem vertikalen Loch (4) der rohrförmigen Platte (5) korrespondierendes Loch der Basisplatte (12) eingeführt zu werden.

7. Vorrichtung gemäß irgendeinem der Ansprüche 1 bis 6,
**dadurch gekennzeichnet, dass** die Kupplungsmittel der Stützplatte (31) mindestens zwei hydraulische Einspannklemmen (40) aufweisen, die vorgesehen sind, um jeweils in ein vertikales Loch (4) der rohrförmigen Platte (5) eingeführt zu werden.

8. Vorrichtung gemäß irgendeinem der Ansprüche 1 bis 6,
**dadurch gekennzeichnet, dass** die Kupplungsmittel der Stützplatte (31) vier hydraulische Einspannklemmen (40) aufweisen, die vorgesehen sind, um jeweils in ein vertikales Loch (4) der rohrförmigen Platte (5) eingeführt zu werden, wobei jede der Klemmen (40) in einer Ecke der Stützplatte (31) angeordnet ist.

9. Vorrichtung gemäß irgendeinem der Ansprüche 1 bis 8,
**dadurch gekennzeichnet, dass** das pendelartige Hebemittel (19) durch eine Kette oder ein Kabel ausgebildet ist.

10. Vorrichtung gemäß irgendeinem der Ansprüche 1 bis 9,
**dadurch gekennzeichnet, dass** das Antriebsmittel (33) durch ein Rad ausgebildet ist, das von einem Getriebemotor (36) drehbar angetrieben wird und mit Mitteln für einen Eingriff mit dem Hebemittel (19) ausgestattet ist.

11. Vorrichtung gemäß Anspruch 10, **dadurch gekennzeichnet, dass** das Rad ein Zahnrad ist.

12. Verfahren für einen Einsatz in einem Wasserkasten (7) eines Wärmetauschers (1), der eine Wand (6) mit einer im Wesentlichen hemisphärischen Form aufweist, die mindestens eine Inspektionsöffnung (9) aufweist und an ihrem oberen Abschnitt durch eine rohrförmige Platte (5) begrenzt ist, die von einer Mehrzahl von vertikalen Löchern (4) durchquert wird, **dadurch gekennzeichnet, dass**:
- durch die Inspektionsöffnung (9) mindestens eine Schiene (11) in den Wasserkasten (7) eingeführt wird, die mindestens einen Schlitten (15) abstützt, der entlang der Schiene (11) bewegbar ist und mit einem pendelartigen Hebemittel (19) ausgestattet ist,
- die Schiene (11) an der unteren Seite der rohrförmigen Platte (5) befestigt wird,
- ein Roboterarm (20), der einen Befestigungssockel (30) aufweist, der einerseits an der unteren Seite der rohrförmigen Platte (5) und auf beiden Seiten der Schiene (11) mit Kupplungsmitteln (40) und andererseits mit einem mit dem Hebemittel (19) zusammenwirkenden Antriebsmittel (33) ausgestattet ist, außen am Wasserkasten (7) platziert wird,
- der Befestigungssockel (30) des Roboterarms (20) gegenüber der Inspektionsöffnung (9) angeordnet wird,
- der Roboterarm im Inneren des Wasserkastens (7) mittels des mit dem Antriebsmittel (33) zusammenwirkenden Hebemittels (19) hochgezogen wird,
- der Befestigungssockel (30) des Roboterarms (20) an der unteren Seite der rohrförmigen Platte (5) durch die Kupplungsmittel (40) in den vertikalen Löchern (4) an einer bestimmten Stelle befestigt wird, und
- der Roboterarm (20) von außerhalb des Wasserkastens (7) aus ferngesteuert wird, um die verschiedenen Arbeitsgänge im Inneren dieses Wasserkastens (7) durchzuführen.

13. Verfahren gemäß Anspruch 12, **dadurch gekennzeichnet, dass** der Roboterarm (20) einerseits unter der Einwirkung des mit dem Hebemittel (19) zusammenwirkenden Antriebsmittels (33) und andererseits mittels des Schlittens (15) bis zu einer vorbestimmten neuen Stelle bewegt wird, um eine neue Reihe von Arbeitsgängen im Inneren des Wasserkastens (7) durchzuführen.

14. Verfahren gemäß Anspruch 12 oder 13, **dadurch gekennzeichnet, dass** nach dem Befestigen des Befestigungssockels (30) des Roboterarms (20) an der unteren Seite der rohrförmigen Platte (5):
- ein Befestigungssockel (30) einer Werkzeughalterung (60), der an der unteren Seite der rohrförmigen Platte (5) auf beiden Seiten der Schiene (11) mit Kupplungsmitteln (40) und mit einem mit dem Hebemittel (19) zusammenwirkenden Antriebsmittel (33) ausgestattet ist, gegenüber der Inspektionsöffnung (9) angeordnet wird,
- die Werkzeughalterung (60) im Inneren des Wasserkastens (7) mittels des mit dem Antriebsmittel (33) zusammenwirkenden Hebemittels (19) hochgezogen wird,
- der Befestigungssockel (30) der Werkzeughalterung (60) an der unteren Seite der rohrförmigen Platte (5) durch die Kupplungsmittel (40) in den vertikalen Löchern (4) an einer vorbestimmten Stelle befestigt wird, und
- der Roboterarm (20) von außerhalb von dem Wasserkasten (7) aus ferngesteuert wird, um einerseits verschiedene Arbeitsgänge im Inneren dieses Wasserkastens und andererseits zum Durchführen des Einsatzes erforderliche Werkzeugwechsel durchzuführen, wobei bewirkt wird, dass das Ende des Roboterarms (20) mit den an der Werkzeughalterung (60) wartenden Werkzeugen zusammenwirkt.

## Claims

1. Device for operating in a water chamber (7) of a heat exchanger (1) comprising a wall (6) of substantially hemispherical shape comprising at least one entry hatch (9) and delimited at its upper portion by a tube plate (5) traversed by a plurality of vertical holes (4), **characterized in that** it comprises:
- at least one rail (11) furnished with members (18) for attachment on the bottom face of the tube plate (5) and supporting at least one trolley (15) that can be moved along the said rail (11) and fitted with a pendular lifting means (19), and
- a robotic arm (20) comprising an attachment base (30) furnished, on the one hand, with members (40) for coupling on the bottom face of the tube plate (5) either side of the said rail (11) and, on the other hand, with a drive means (33) interacting with the lifting means (19) to draw the attachment base (30) against the tube plate (5).

2. Device according to Claim 1, **characterized in that** the said at least one rail (11) comprises at least one second rail placed in the extension of the first rail and one second trolley (15) that can be moved along the rail (11), and **in that** the device comprises a tool-carrier (60) comprising an attachment base (30) furnished, on the one hand, with members (40) for coupling on the bottom face of the tube plate (5), either side of the said rail (11), and, on the other hand, a drive means (33) interacting with the lifting means (19) to draw the attachment base (30) against the tube plate (5).

3. Device according to Claim 1 or 2, **characterized in that** the said attachment members of the said at least one rail (11) are formed by at least two retaining clamps (18) each intended to be inserted into a vertical hole (4) of the tube plate (5).

4. Device according to any one of Claims 1 to 3, **characterized in that** it comprises a movable ramp (50) for inserting the robotic arm (20) comprising elements (51) for attachment on the outer periphery of the entry hatch (9) and a plate (52) for supporting the robotic arm (20) whose attachment base (30) is placed facing the entry hatch (9) and can be moved on the said ramp (50).

5. Device according to any one of Claims 1 to 4, **characterized in that** the attachment base (30) of the robotic arm (20) and of the tool-carrier (60) is formed by a bearing plate (31) of generally parallelepipedic shape comprising a central housing (32) of the drive means (33) and, on two opposite sides, a recess (37) for positioning the rail (11).

6. Device according to Claim 5, **characterized in that** the bearing plate (31) comprises, in at least one recess (37) of one of its sides, two indexing posts (38) each intended to be inserted into a hole of the soleplate (12) in correspondence with a vertical hole (4) of the tube plate (5).

7. Device according to any one of Claims 1 to 6, **characterized in that** the coupling members of the bearing plate (31) comprise at least two hydraulic retaining clamps (40) each intended to be inserted into a vertical hole (4) of the tube plate (5).

8. Device according to any one of Claims 1 to 6, **characterized in that** the coupling members of the bearing plate (31) comprise four hydraulic retaining clamps (40) each intended to be inserted into a vertical hole (4) of the tube plate (5), each of the said clamps (40) being placed on a corner of the bearing plate (31).

9. Device according to any one of Claims 1 to 8, **characterized in that** the pendular lifting means (19) is formed by a chain or a cable.

10. Device according to any one of Claims 1 to 9, **characterized in that** the drive means (33) is formed by a wheel rotated by a reducing gear (36) and furnished with members for engagement with the lifting means (19).

11. Device according to Claim 10, **characterized in that** the wheel is a gear wheel.

12. Method of operating in a water chamber (7) of a heat exchanger (1) comprising a wall (6) of substantially hemispherical shape comprising at least one entry hatch (9) and delimited at its upper portion by a tube plate (5) traversed by a plurality of vertical holes (4), **characterized in that**:
- at least one rail (11) supporting at least one trolley (15) that can be moved along the said rail (11) and is fitted with a pendular lifting means (19) is inserted through the entry hatch (9) into the water chamber (7),
- the said rail (11) is attached on the bottom face of the tube plate (5),
- outside the water chamber (7), a robotic arm (20) is placed comprising an attachment base (30) furnished, on the one hand, with members (40) for coupling on the bottom face of the tube plate (5) and either side of the said rail (11) and, on the other hand, with a drive means (33) interacting with the lifting means (19),
- the attachment base (30) of the robotic arm (20) is placed facing the entry hatch (9),
- the robotic arm is hoisted inside the water chamber (7) by means of the lifting means (19) interacting with the drive means (33),
- the attachment base (30) of the robotic arm (20) is attached in a determined position on the bottom face of the tube plate (5) by the members (40) for coupling in the vertical holes (4), and
- the robotic arm (20) is controlled remotely from outside the water chamber (7) to carry out the various operations inside this water chamber (7).

13. Method according to Claim 12, **characterized in that**, on the one hand, by the action of the drive means (33) interacting with the lifting means (19) and, on the other hand, by means of the trolley (15), the robotic arm (20) is moved to a new predetermined position to carry out a new series of operations inside the water chamber (7).

14. Method according to Claim 12 or 13, **characterized in that**, after the attachment base (30) of the robotic arm (20) has been attached on the bottom face of the tube plate (5):
- facing the entry hatch (9), an attachment base (30) of a tool-carrier (60) is placed furnished with members (40) for coupling on the bottom face of the tube plate (5) either side of the said rail (11) and of a drive means (33) interacting with the lifting means (19),
- the tool-carrier (60) is hoisted inside the water chamber (7) by means of the lifting means (19) interacting with the drive means (33),
- in a determined position, the attachment base (30) of the tool-carrier (60) is attached on the bottom face of the tube plate (5) by the coupling members (40) in the vertical holes (4), and
- the robotic arm (20) is controlled remotely from the outside of the water chamber (7) to carry out, on the one hand, various operations inside this water chamber and, on the other hand, tool-changes necessary to complete the operation, by causing the end of the robotic arm (20) to interact with the tools waiting on the tool-carrier (60).
